# EUROPEAN PATENT SPECIFICATION

(11) **EP 4 340 075 B1**
(45) Date of publication and mention of the grant of the patent: **02.12.2026**
(21) Application number: 22890249.0
(22) Date of filing: 24.10.2022
(51) Int. Cl.: H01M 4/66, H01M 4/62, H01M 4/139, H01M 4/1397, H01M 4/13, H01M 4/136, H01M 10/052, H01M 4/58, H01M 4/02, H01M 4/04, H01M 4/52, H01M 10/0525

(54) **METHOD FOR MANUFACTURING POSITIVE ELECTRODE CURRENT COLLECTOR COATED WITH ADHESION ENHANCEMENT LAYER, POSITIVE ELECTRODE CURRENT COLLECTOR COATED WITH ADHESION ENHANCEMENT LAYER MANUFACTURED THEREFROM, METHOD FOR MANUFACTURING POSITIVE ELECTRODE FOR LITHIUM SECONDARY BATTERY, POSITIVE ELECTRODE FOR LITHIUM SECONDARY BATTERY MANUFACTURED THEREFROM AND LITHIUM SECONDARY BATTERY COMPRISING THE SAME**
VERFAHREN ZUR HERSTELLUNG EINES MIT EINER HAFTVERBESSERUNGSSCHICHT BESCHICHTETEN STROMSAMMELERS FÜR EINE POSITIVE ELEKTRODE, DARAUS HERGESTELLTER, MIT EINER HAFTVERBESSERUNGSSCHICHT BESCHICHTETER STROMSAMMELER FÜR EINE POSITIVE ELEKTRODE, VERFAHREN ZUR HERSTELLUNG EINER POSITIVEN ELEKTRODE FÜR EINE LITHIUM-SEKUNDÄRBATTERIE, EINE DAMIT HERGESTELLTE POSITIVE ELEKTRODE FÜR EINE LITHIUM-SEKUNDÄRBATTERIE UND EINE LITHIUM-SEKUNDÄRBATTERIE, DIE DIESE ENTHÄLT
PROCÉDÉ DE FABRICATION D'UN COLLECTEUR DE COURANT REVÊTU D'UNE COUCHE AMÉLIORANT L'ADHÉRENCE POUR UNE ÉLECTRODE POSITIVE, COLLECTEUR DE COURANT POUR ÉLECTRODE POSITIVE FABRIQUÉ SELON CE PROCÉDÉ ET REVÊTU D'UNE COUCHE AMÉLIORANT L'ADHÉRENCE, PROCÉDÉ DE FABRICATION D'UNE ÉLECTRODE POSITIVE POUR UNE BATTERIE SECONDAIRE AU LITHIUM, UNE ÉLECTRODE POSITIVE POUR UNE BATTERIE SECONDAIRE AU LITHIUM FABRIQUÉE SELON CE PROCÉDÉ ET UNE BATTERIE SECONDAIRE AU LITHIUM LA CONTENANT

(30) Priority: 03.11.2021 KR 20210150118; 03.11.2021 KR 20210150119
(43) Date of publication of application: 20.03.2024
(73) Proprietor: LG Chem, Ltd., Seoul 07336 (KR)
(72) Inventor: KIM, Min-Soo, Daejeon 34122 (KR); KIM, Su-Jin, Daejeon 34122 (KR); SEO, Jung-Hyun, Daejeon 34122 (KR); JUNG, Soon-Hwa, Daejeon 34122 (KR)
(74) Representative: Plasseraud IP
(86) International application number: PCT/KR2022/016295
(87) International publication number: WO 2023/080514

(56) References cited:
- JP-A- 2008 084 742
- JP-A- 2018 190 527
- KR-A- 20150 045 833
- KR-A- 20150 050 075
- KR-A- 20170 045 910
- KR-A- 20190 109 284

## Description

### TECHNICAL FIELD

The present invention relates to a method for manufacturing a positive electrode current collector coated with an adhesion enhancement layer, a positive electrode current collector coated with an adhesion enhancement layer manufactured therefrom, a method for manufacturing a positive electrode for a lithium secondary battery, a positive electrode for a lithium secondary battery manufactured therefrom and a lithium secondary battery comprising the same.

The present application claims priority to Korean Patent Application No. 10-2021-0150118 filed on November 3, 2021 and Korean Patent Application No. 10-2021-0150119 filed on November 3, 2021 in the Republic of Korea.

### BACKGROUND ART

Recently, with the rapid widespread use of electronic devices using batteries, for example, mobile phones, laptop computers and electric vehicles, there is a fast growing demand for secondary batteries with small size, light weight and relatively high capacity. In particular, lithium secondary batteries are gaining attention as a power source for driving mobile devices due to their light weight and high energy density advantages. Accordingly, there are many research and development efforts to improve the performance of lithium secondary batteries.

A lithium secondary battery comprises a positive electrode and a negative electrode made of active materials capable of intercalating and deintercalating lithium ions and an organic electrolyte solution or a polymer electrolyte solution filled between the positive electrode and the negative electrode, and produces electrical energy by oxidation and reduction reactions during the intercalation/deintercalation of lithium ions at the positive electrode and the negative electrode.

In general, the positive electrode of the lithium secondary battery is manufactured by coating a positive electrode active material slurry comprising a positive electrode active material, a conductive material, a binder polymer and a solvent on a positive electrode current collector made of a metal such as aluminum and drying to form a positive electrode active material layer. Specifically, the positive electrode is manufactured by weighing and mixing each constituent material of the positive electrode active material slurry, coating and drying the positive electrode active material slurry on the positive electrode current collector, and pressing.

The manufactured positive electrode is assembled into the lithium secondary battery through post-processing, and there is a likelihood that the positive electrode active material may be detached due to the low adhesion strength of the positive electrode active material layer and the current collector. This problem gets worse when the positive electrode active material is a lithium iron phosphate based positive electrode active material or the size of the active material is smaller.

To solve this problem, forming an adhesion enhancement layer comprising a binder polymer on the current collector before forming the positive electrode active material layer on the current collector has been proposed, but there is a need for the development of adhesion enhancement layers with high adhesion strength of the positive electrode active material layer to the current collector and low interfacial resistance.

Additionally, there is a need for the manufacture of lithium secondary batteries with reduced energy required to dry the coated adhesion enhancement layer forming slurry and improved adhesion strength with electrodes when applied to lithium secondary batteries comprising electrolyte solutions.

### DISCLOSURE

### Technical Problem

An aspect of the present invention is a method for manufacturing a positive electrode current collector coated with an adhesion enhancement layer The present invention is a method for manufacturing a positive electrode current collector coated with an adhesion enhancement layer according to independent claim 1 and a positive electrode current collector coated with an adhesion enhancement layer according to independent claim 9. Preferred embodiments are defined in the dependent claims.

### Technical Solution

In an aspect of the present invention, according to claim 1 there is provided a method for manufacturing a positive electrode current collector coated with an adhesion enhancement layer according to the following embodiment.

The method for manufacturing a positive electrode current collector coated with an adhesion enhancement layer is comprising the steps of:
preparing an aqueous slurry comprising a first binder polymer comprising polyvinylidenefluoride-based polymer particles having a melting point of 50 to 150°C and a first conductive material at a weight ratio of 0.5:1 to 8:1; and coating the aqueous slurry on at least one surface of a metal current collector and drying by thermal treatment at higher temperature than the melting point of the polyvinylidenefluoride-based polymer particles to form the adhesion enhancement layer, wherein the first binder polymer is distributed in an island array over the surface of the metal current collector and the island arrays does not cover the entire surface of the current collector; wherein the melting point is measured using differential scanning calorimetry.

In a preferred embodiment the melting point of the polyvinylidenefluoride-based polymer is 70 to 150°C, and more specifically, 90 to 150°C.

In another preferred embodiment the polyvinylidenefluoride-based polymer is a vinylidenefluoride-hexafluoropropylene copolymer.

In another preferred embodiment a weight average molecular weight of the polyvinylidenefluoride-based polymer is 700,000 to 1,300,000, and more specifically 800,000 to 1,100,000.

In another preferred embodiment an average particle size of the polyvinylidenefluoride-based polymer particles is 10 nm to 3 µm.

In another preferred embodiment an average particle size of the polyvinylidenefluoride-based polymer particles is 100 nm to 1,000 nm, and an average particle size of the first conductive material is 10 nm to 1,000 nm.

In another preferred embodiment the average particle size of the polyvinylidenefluoride-based polymer particles is 3 to 20 times larger than the average particle size of the first conductive material.

In another preferred embodiment the drying is performed at the higher temperature than the melting point of the polyvinylidenefluoride-based polymer particles by 10 to 80°C.

Another aspect of the present invention provides a positive electrode current collector coated with an adhesion enhancement layer according to independent claim 9 on file.

In a preferred embodiment the melting point of the polyvinylidenefluoride-based polymer is 70 to 150°C, and more specifically 90 to 150°C.

In a preferred embodiment the polyvinylidenefluoride-based polymer is a vinylidenefluoride-hexafluoropropylene copolymer.

In another preferred emodiment a weight average molecular weight of the polyvinylidenefluoride-based polymer is 700,000 to 1,300,000, and more specifically 800,000 to 1,100,000.

Another aspect of the present invention provides a method for manufacturing a positive electrode for a lithium secondary battery according to claim 13 comprising the steps of: manufacturing the positive electrode current collector coated with an adhesion enhancement layer according to any one of claims 1 to 8; and stacking a positive electrode active material layer comprising a positive electrode active material, a second conductive material and a second binder polymer on the adhesion enhancement layer and attaching to the adhesion enhancement layer.

Another embodiment of the present disclosure relates to the method for manufacturing a positive electrode for a lithium secondary battery wherein the metal current collector is made of aluminum, and the positive electrode active material is represented by the following Formula 1:

<Formula 1 > Li₁₊ₐFe₁₋ₓMₓ(PO_{4-b})X_{b}

(where M is at least one selected from the group consisting of Al, Mg, Ni, Co, Mn, Ti, Ga, Cu, V, Nb, Zr, Ce, In, Zn and Y, and X is at least one selected from the group consisting of F, S and N, -0.5 ≤ a ≤ +0.5, 0 ≤ x ≤0.5, 0 ≤ b ≤ 0.1).

Another embodiment of the present disclosure relates to the method for manufacturing a positive electrode for a lithium secondary battery wherein the second binder polymer is at least one selected from the group consisting of polyvinylidenefluoride, poly(vinylidenefluoride-hexafluoropropylene) and poly(vinylidenefluoride-chlorotrifluoroethylene).

Another embodiment of the present disclosure relates to the method for manufacturing a positive electrode for a lithium secondary battery wherein the adhesion enhancement layer is 50 to 5,000 nm in thickness on one surface of the metal current collector, and the positive electrode active material layer is 40 to 200 µm in thickness on one surface of the adhesion enhancement layer.

Another aspect of the present invention provides a positive electrode for a lithium secondary battery according to the following embodiment.

Claim 14 relates to a positive electrode for a lithium secondary battery comprising the positive electrode current collector coated with an adhesion enhancement layer according to any one of the ninth to twelfth embodiments; and a positive electrode active material layer attached onto the adhesion enhancement layer, and comprising a positive electrode active material, a second conductive material and a second binder polymer.

Another embodiment of the present disclosure relates to the positive electrode for a lithium secondary battery wherein the metal current collector is made of aluminum, and the positive electrode active material is represented by the following Formula 1:

<Formula 1 > Li₁₊ₐFe₁₋ₓMₓ(PO_{4-b})X_{b}

where M is at least one selected from the group consisting of Al, Mg, Ni, Co, Mn, Ti, Ga, Cu, V, Nb, Zr, Ce, In, Zn and Y, and X is at least one selected from the group consisting of F, S and N, -0.5 ≤ a ≤ +0.5, 0 ≤ x ≤0.5, 0 ≤ b ≤ 0.1)

Another embodiment of the present disclosure relates to the positive electrode for a lithium secondary battery wherein the second binder polymer is at least one selected from the group consisting of polyvinylidenefluoride, poly(vinylidenefluoride-hexafluoropropylene) and poly(vinylidenefluoride-chlorotrifluoroethylene).

Another embodiment of the present disclosure relates to the positive electrode for a lithium secondary battery wherein the adhesion enhancement layer is 50 to 5,000 nm in thickness on one surface of the metal current collector, and the positive electrode active material layer is 40 to 200 µm in thickness on one surface of the adhesion enhancement layer.

The present invention provides a lithium secondary battery according to claim 14 comprising the positive electrode according to claim 14.

### Advantageous Effects

According to the present invention, the adhesion enhancement layer forming aqueous slurry comprising the polyvinylidenefluoride-based polymer particles having the predetermined melting point range and the first conductive material in the predetermined amount ratio range is coated on the metal current collector and dried at higher temperature than the melting point, and when solidified after melting, the polyvinylidenefluoride-based polymer of the adhesion enhancement layer is distributed in island arrays over the surface of the current collector. That is, the polyvinylidenefluoride-based polymer distributed in island arrays does not cover the entire surface of the current collector. Accordingly, the adhesion enhancement layer improves the adhesion strength between the positive electrode active material layer and the current collector and has low interfacial resistance.

Additionally, with the polyvinylidenefluoride-based polymer having the predetermined melting point range, even when the aqueous slurry is dried at relatively low temperature to reduce energy, the polyvinylidenefluoride-based polymer particles may show good adhesion performance as the adhesion enhancement layer after melting and solidification and have resistance to dissolution in the electrolyte solution when applied to the lithium secondary battery comprising the electrolyte solution, thereby maintaining the adhesion strength with the positive electrode.

### DESCRIPTION OF DRAWINGS

The accompanying drawings illustrate an exemplary embodiment of the present invention, and together with the foregoing description of the present disclosure, serve to help a further understanding of the technical aspects of the present invention, so the present invention should not be construed as being limited to the drawings. Meanwhile, the shape, size, scale or proportion of the elements in the accompanying drawings may be exaggerated to emphasize a more clear description.
FIG. 1 is a scanning electron microscopy (SEM) image of an adhesion enhancement layer according to example 1.
FIG. 2 a differential scanning calorimetry (DSC) chart of polymer A used in example 1.

### BEST MODE

Hereinafter, an embodiment of the present disclosure will be described in detail.

According to a method for manufacturing a positive electrode current collector coated with an adhesion enhancement layer according to an aspect of the present disclosure, an aqueous slurry comprising a first binder polymer comprising polyvinylidenefluoride-based polymer particles having the melting point of 50 to 150°C and a first conductive material at a weight ratio of 0.5:1 to 8:1 is prepared.

The adhesion enhancement layer forming slurry is an aqueous slurry using water as a dispersion medium.

The aqueous slurry may further comprise selectively a solvent, for example, isopropyalcohol, acetone, ethanol and butyl alcohol to reduce the surface energy and improve the coating performance.

The aqueous slurry comprises a first binder polymer to improve the adhesion strength of the metal current collector and the positive electrode active material layer, and for the first binder polymer, the present disclosure comprises, for example, particles of polyvinylidenefluoride-based polymer having the melting point of 50 to 150°C. The use of the particulate polyvinylidenefluoride-based polymer prevents an increase in resistance of the adhesion enhancement layer.

The average particle size of the polyvinylidenefluoride-based polymer particles may be, for example, 10 nm to 3 µm, from the perspective of dispersion and storage safety. In particular, the average particle size of the polyvinylidenefluoride-based polymer particles may be 100 nm to 1,000 nm when considering improvement in bonding to the positive electrode active material layer, phase safety in the slurry and solvent resistance in the electrolyte solution. Additionally, the average particle size of the polyvinylidenefluoride-based polymer particles may be 3 to 20 times larger than the average particle size of the first conductive material.

When the melting point of the polyvinylidenefluoride-based polymer is less than 50°C, there is a high likelihood that the polyvinylidenefluoride-based polymer will dissolve in the electrolyte solution used in the battery assembly and the adhesion strength with the electrode reduces. Additionally, when the melting point exceeds 150°C, the drying temperature of the aqueous slurry as describe below increases so much, resulting in an increase in energy consumption and a decrease in adhesion strength improvement. In this view, more specifically, the melting point of the polyvinylidenefluoride-based polymer may be 70 to 150°C, more specifically 90 to 150°C, and most specifically 100 to 140°C. The polyvinylidenefluoride-based polymer may include, for example, vinylidenefluoride-hexafluoropropylene, but is not limited thereto.

The weight average molecular weight of the polyvinylidenefluoride-based polymer may be 700,000 to 1,300,000, and more specifically 800,000 to 1,100,000. When the weight average molecular weight is in the above-described range, the adhesion strength with the positive electrode active material layer is further enhanced.

In addition to the polyvinylidenefluoride-based polymer particles described above, the aqueous slurry may further comprise another binder polymer in particulate form or dissolved form in water without departing from the objective of the present disclosure.

Meanwhile, the aqueous slurry comprises a first conductive material to prevent an increase in resistance of the positive electrode. The amount of the first conductive material may be, for example, 10 to 200 parts by weight based on 100 parts by weight of the first binder polymer, but is not limited thereto. The average particle size of the first conductive material may be 10 nm to 1,000 nm when considering the dispersion in the slurry and conductivity, but is not limited thereto.

The first conductive material may include, without limitation, any type of conductive material that has conductivity without causing side reaction with the other elements of the battery, for example, graphite such as natural graphite or artificial graphite; carbon black such as carbon black (super-p), acetylene black, ketjen black, channel black, furnace black, lamp black, thermal black; conductive fibers such as carbon fibers or metal fibers; carbon nanotubes such as MW-CNT, SW-CNT; fluorocarbon; metal powder such as aluminum and nickel powder; conductive whiskers such as zinc oxide and potassium titanate; conductive metal oxide such as titanium oxide; or conductive materials such as polyphenylene derivatives, and they may be used singly or in combination to reduce the interfacial resistance.

A weight ratio of the first binder polymer comprising the polyvinylidenefluoride-based polymer particles and the first conductive material in the aqueous slurry is 0.5:1 to 8:1. When the weight ratio is less than 0.5:1, the adhesion strength is poor, and when the weight ratio exceeds 8:1, the interfacial resistance increases so much. In view of this, the weight ratio of the polyvinylidenefluoride-based polymer particles and the first conductive material may be 1:1 to 5:1.

The aqueous slurry may further comprise at least one type of thickening agent to control the viscosity. In particular, the thickening agent may include carboxymethylcellulose, hydroxymethylcellulose, ethylcellulose, polyvinylalcohol, casein and methylcellulose, but is not limited thereto.

In addition to the above-described components, the aqueous slurry may further include any other additive, for example, a dispersant without departing from the objective of the present disclosure.

Subsequently, the prepared aqueous slurry is coated on at least one surface of the metal current collector, and dried by thermal treatment at higher temperature than the melting point of the polyvinylidenefluoride-based polymer particles to form the adhesion enhancement layer.

For the positive electrode current collector, a metal current collector such as aluminum is used. In particular, aluminum may be used in the form of a foil, and the aluminum foil easily oxidizes in air to form a surface layer of aluminum oxide. Accordingly, the current collector of aluminum should be interpreted as comprising the current collector having the aluminum oxide surface layer formed by the oxidation of aluminum on the surface. The thickness of the metal current collector may be typically 3 to 500 µm, but is not limited thereto.

The common slurry coating methods and devices may be used to coat the aqueous slurry on the metal current collector, and the coating methods may include, for example, a bar coating method such as Meyer bar, a gravure coating method, a 2 roll reverse coating method, a vacuum slot die coating method and a 2 roll coating method. The adhesion enhancement layer is formed on at least one surface of the metal current collector, i.e., one or two surfaces of the metal current collector to improve the adhesion strength between the metal current collector and the positive electrode active material layer as described below. The thickness of the adhesion enhancement layer (the thickness of the adhesion enhancement layer formed on one surface of the metal current collector, not two surfaces) may be, for example, 50 to 5,000 nm, and more specifically 100 to 1,000 nm when considering the adhesion strength improvement effect and the increase in resistance of the positive electrode, but is not limited thereto.

The metal current collector coated with the aqueous slurry is dried by thermal treatment at higher temperature than the melting point of the polyvinylidenefluoride-based polymer particles to form the adhesion enhancement layer. Specifically, the drying process may be performed at higher temperature than the melting point of the polyvinylidenefluoride-based polymer particles by 10 to 80°C, but is not limited thereto.

When the polyvinylidenefluoride-based polymer particles are dried by thermal treatment at higher temperature than the melting point of polyvinylidenefluoride-based polymer particles, the polyvinylidenefluoride-based polymer particles melt, and as the temperature decreases, they are solidified to form the adhesion enhancement layer bonded onto the metal current collector. In this instance, the polyvinylidenefluoride-based polymer of the adhesion enhancement layer is distributed in island arrays over the surface of the current collector. That is, the polyvinylidenefluoride-based polymer distributed in island arrays does not cover the entire surface of the current collector. Accordingly, the adhesion enhancement layer improves the adhesion strength between the positive electrode active material layer and the current collector and has low interfacial resistance.

Additionally, as described above, with the polyvinylidenefluoride-based polymer having the predetermined melting point range, it is possible to dry the aqueous slurry at relatively low temperature to reduce energy consumption, and the adhesion enhancement layer has good adhesion performance. The adhesion enhancement layer is resistant to dissolution in the electrolyte solution when applied to lithium secondary batteries comprising electrolyte solutions, thereby maintaining the adhesion strength with the positive electrode.

The positive electrode current collector coated with the adhesion enhancement layer according to an aspect, manufactured by the above-described manufacturing method, comprises:
the metal current collector; and
the adhesion enhancement layer formed on at least one surface of the metal current collector, and comprising the first binder polymer and the first conductive material at the weight ratio of 0.5:1 to 8:1,
wherein the first binder polymer comprises the polyvinylidenefluoride-based polymer,
the first binder polymer is distributed in island arrays over the surface of the metal current collector, and
the melting point of the polyvinylidenefluoride-based polymer is 50 to 150°C.

The type of the metal current collector, the first binder polymer, the first conductive material and the adhesion enhancement layer that make up the positive electrode current collector coated with the adhesion enhancement layer has been described above, and its detailed description is omitted.

After the positive electrode current collector coated with the adhesion enhancement layer is manufactured by the above-described manufacturing method, the positive electrode active material layer comprising a positive electrode active material, a second conductive material and a second binder polymer is stacked on and attached to the adhesion enhancement layer to manufacture a positive electrode for a lithium secondary battery.

The positive electrode active material layer comprises a positive electrode active material, the second conductive material and the second binder polymer, in the same way as the common positive electrode active material layers for lithium secondary batteries.

The positive electrode active material may include the common positive electrode active materials used in lithium secondary batteries, for example, lithium transition metal oxide. In particular, the positive electrode active material may include positive electrode active materials represented by the following Formula 1.

<Formula 1 > Li₁₊ₐFe₁₋ₓMₓ(PO_{4-b})X_{b}

(M is at least one selected from the group consisting of Al, Mg, Ni, Co, Mn, Ti, Ga, Cu, V, Nb, Zr, Ce, In, Zn and Y, and X is at least one selected from the group consisting of F, S and N, -0.5 ≤ a ≤ +0.5, 0 ≤ x ≤0.5, 0 ≤ b ≤ 0.1)

The positive electrode active material of the above Formula 1 is a lithium iron phosphate-based compound, and has low adhesion strength especially with the aluminum current collector. Accordingly, when the adhesion enhancement layer according to the present disclosure is applied, there is a growing industrial need for the improved adhesion strength with the current collector.

The second binder polymer used to bind the positive electrode active material may typically include binder polymers applied to positive electrode materials, for example, at least one of polyvinylidene fluoride (PVDF), polyvinylidene fluoride-hexafluoropropylene copolymer (PVDF-co-HFP), polyvinylalcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or a variety of copolymers thereof. More preferably, the second binder polymer may include polyvinylidenefluoride-based polymer, and the interaction of the adhesion enhancement layer with the polyvinylidenefluoride-based polymer increases the interlayer adhesion strength improvement effect. In this view, more preferably, the second binder polymer may include at least one selected from the group consisting of polyvinylidenefluoride, poly(vinylidenefluoride-hexafluoropropylene) and poly(vinylidenefluoride-chlorotrifluoroethylene). The binder may be included in an amount of 1 to 30 weight% based on the total weight of the positive electrode active material layer.

For the second conductive material used in the positive electrode active material layer, the first conductive material of the adhesion enhancement layer may be independently used. The second conductive material may be typically included in an amount of 1 to 30 weight% based on the total weight of the positive electrode active material layer.

The method for stacking the positive electrode active material layer and attaching it to the adhesion enhancement layer may include the methods commonly used in the corresponding technical field.

For example, a positive electrode active material layer forming composition comprising the positive electrode active material, the second conductive material and the second binder polymer on the adhesion enhancement layer may be coated, dried and pressed.

In this instance, a solvent used in the positive electrode active material layer forming composition may include solvents commonly used in the corresponding technical field, for example, at least one of dimethyl sulfoxide (DMSO), isopropyl alcohol, N-methylpyrrolidone (NMP), acetone or water. The solvent may be used in such an amount to have sufficient viscosity for dissolving the binder polymer, dispersing the conductive material and the positive electrode active material, and subsequently, achieving good thickness uniformity when coating for manufacturing the positive electrode in view of the coating thickness of the coating solution and the production yield.

The polyvinylidenefluoride-based polymer included in the adhesion enhancement layer has flowability when subjected to heat and pressure. For example, when subjected to heat and pressure at higher temperature than the glass transition temperature of the polyvinylidenefluoride-based polymer in the temperature range of the melting point (Tm) of the polymer - 60°C to the melting point (Tm) of the binder polymer + 60°C, more specifically the temperature range of the melting point (Tm) of the binder polymer - 50°C to the melting point (Tm) of the binder polymer + 50°C, and more specifically in the temperature range of the melting point (Tm) of the binder polymer - 40°C to the melting point (Tm) of the binder polymer + 30°C, the binder polymer of the adhesion enhancement layer becomes flowable by the heat and attaches to the surface layer of the positive electrode active material layer in contact with the adhesion enhancement layer.

In the positive electrode for a lithium secondary battery according to an aspect, manufactured by the above-described manufacturing method, the thickness of the positive electrode active material layer (the thickness of the positive electrode active material layer formed on one surface of the adhesion enhancement layer, not two surfaces of the adhesion enhancement layer after pressing) may be 40 to 200 µm, but is not limited thereto.

The adhesion strength of the positive electrode active material layer is preferably 30 gf/2cm or more, and more preferably 40 gf/2cm or more. Additionally, the interfacial resistance of the positive electrode active material layer is preferably 3 Ωcm² or less, and more preferably 2 Ωcm² or less.

The positive electrode for a lithium secondary battery according to an aspect, manufactured by the above-described manufacturing method comprises:
the positive electrode current collector coated with the adhesion enhancement layer; and
the positive electrode active material layer attached onto the adhesion enhancement layer, and comprising the positive electrode active material, the second conductive material and the second binder polymer.

The metal current collector, the binder polymers, the conductive materials and the positive electrode active material that make up the positive electrode for a lithium secondary battery have been hereinabove described, and a detailed description is omitted.

According to another embodiment of the present disclosure, there is provided a lithium secondary battery comprising the positive electrode for a lithium secondary battery.

Specifically, the lithium secondary battery comprises the positive electrode, a negative electrode opposite the positive electrode, a separator between the positive electrode and the negative electrode and an electrolyte, and the positive electrode is the same as described above. Additionally, optionally, the lithium secondary battery may further comprise a battery case accommodating an electrode assembly comprising the positive electrode, the negative electrode and the separator, and a sealing member to seal up the battery case.

In the lithium secondary battery, the negative electrode comprises a negative electrode current collector and a negative electrode active material layer on the negative electrode current collector.

The negative electrode current collector is not limited to a particular type and may include those having high conductivity without causing any chemical change to the battery, for example, copper, stainless steel, aluminum, nickel, titanium, sintered carbon, copper or stainless steel treated with carbon, nickel, titanium or silver on the surface and an aluminum-cadmium alloy, but is not limited thereto. Additionally, the negative electrode current collector may be typically 3 to 500 *µ*m in thickness, and in the same way as the positive electrode current collector, the negative electrode current collector may have microtexture on the surface to improve the bonding strength of the negative electrode active material. For example, the negative electrode current collector may come in various forms, for example, films, sheets, foils, nets, porous bodies, foams and non-woven fabrics.

In addition to the negative electrode active material, the negative electrode active material layer optionally comprises a binder and a conductive material. For example, the negative electrode active material layer may be formed by applying a negative electrode forming composition comprising the negative electrode active material, and optionally the binder and the conductive material on the negative electrode current collector and drying, or by casting the negative electrode forming composition on a support, peeling off a film from the support and laminating the film on the negative electrode current collector.

The negative electrode active material may include compounds capable of reversibly intercalating and deintercalating lithium. Specific examples may include at least one of a carbonaceous material, for example, artificial graphite, natural graphite, graphitizing carbon fibers, amorphous carbon; a (semi)metal-based material that can form an alloy with lithium, for example, Si, Al, Sn, Pb, Zn, Bi, In, Mg, Ga, Cd, a Si alloy, a Sn alloy or an Al alloy; (semi)metal oxide capable of doping or undoping lithium such as SiO_{β} (0 < β < 2), SnO₂, vanadium oxide, lithium vanadium oxide; or a complex comprising the (semi)metal-based material and the carbonaceous material such as a Si-C complex or a Sn-C complex. Additionally, a metal lithium thin film may be used for the negative electrode active material. Additionally, the carbon material may include low crystalline carbon and high crystalline carbon. The low crystalline carbon typically includes soft carbon and hard carbon, and the high crystalline carbon typically includes high temperature sintered carbon, for example, amorphous, platy, flaky, spherical or fibrous natural graphite or artificial graphite, Kish graphite, pyrolytic carbon, mesophase pitch based carbon fibers, meso-carbon microbeads, mesophase pitches and petroleum or coal tar pitch derived cokes.

Additionally, the binder and the conductive material may be the same as those of the positive electrode described above.

On the other hand, in the lithium secondary battery, the separator separates the negative electrode from the positive electrode and provides a passage for movement of lithium ions, and may include, without limitation, any separator commonly used in lithium secondary batteries, and in particular, preferably, those having low resistance to the electrolyte ion movement and good electrolyte solution wettability. Specifically, the separator may include, for example, a porous polymer film made of a polyolefin-based polymer such as an ethylene homopolymer, a propylene homopolymer, an ethylene/butene copolymer, an ethylene/hexene copolymer and an ethylene/methacrylate copolymer or a stack structure of two or more porous polymer films. Additionally, the separator may include common porous non-woven fabrics, for example, non-woven fabrics made of high melting point glass fibers and polyethylene terephthalate fibers. Additionally, to ensure the heat resistance or mechanical strength, the coated separator comprising ceramics or polymer materials may be used, and may be selectively used with a mono- or multi-layer structure.

Additionally, the electrolyte used in the present disclosure may include an organic liquid electrolyte, an inorganic liquid electrolyte, a solid polymer electrolyte, a gel polymer electrolyte, a solid inorganic electrolyte and a molten inorganic electrolyte, available in the manufacture of lithium secondary batteries, but is not limited thereto.

Specifically, the electrolyte may be an electrolyte solution comprising an organic solvent and a lithium salt.

The organic solvent may include, without limitation, any type of organic solvent that acts as a medium for the movement of ions involved in the electrochemical reaction of the battery. Specifically, the organic solvent may include an ester-based solvent, for example, methyl acetate, ethyl acetate, γ-butyrolactone, ε-caprolactone; an ether-based solvent, for example, dibutyl ether or tetrahydrofuran; a ketone-based solvent, for example, cyclohexanone; an aromatic hydrocarbon-based solvent, for example, benzene, fluorobenzene; a carbonate-based solvent, for example, dimethylcarbonate (DMC), diethylcarbonate (DEC), ethylmethylcarbonate (EMC), ethylene carbonate (EC), propylene carbonate (PC); an alcohol-based solvent, for example, ethylalcohol, isopropyl alcohol; nitriles, for example, R-CN (R is a C2 to C20 straight-chain, branched-chain or cyclic hydrocarbon, and may comprise a double bond, an aromatic ring, or ether bond); amides, for example, dimethylformamide; dioxolanes, for example, 1,3-dioxolane; or sulfolanes. Among them, the carbonate-based solvent is desirable, and more preferably, the cyclic carbonate (for example, ethylene carbonate or propylene carbonate) having high ionic conductivity and high dielectric constant which contributes to the improved charge/discharge performance of the battery may be mixed with the linear carbonate-based compound (for example, ethylmethyl carbonate, dimethyl carbonate or diethyl carbonate) of low viscosity. In this case, the cyclic carbonate and the chain carbonate may be mixed at a volume ratio of about 1:1 to about 1:9 to improve the performance of the electrolyte solution.

The lithium salt may include, without limitation, any compound that can provide lithium ions used in lithium secondary batteries. Specifically, the lithium salt may include LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI or LiB(C₂O₄)₂. The concentration of the lithium salt may range from 0.1 to 2.0M. When the concentration of the lithium salt is included in the above-described range, the electrolyte has the optimal conductivity and viscosity, resulting in good performance of the electrolyte and effective movement of lithium ions.

In addition to the above-described constituent substances of the electrolyte, the electrolyte may further comprise, for example, at least one type of additive of a haloalkylene carbonate-based compound such as difluoro ethylene carbonate, pyridine, triethylphosphite, triethanolamine, cyclic ether, ethylene diamine, n-glyme, hexamethylphosphoric triamide, nitrobenzene derivatives, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride to improve the life characteristics of the battery, prevent the capacity fading of the battery and improve the discharge capacity of the battery. In this instance, the additive may be included in an amount of 0.1 to 5 weight% based on the total weight of the electrolyte.

The lithium secondary battery is useful in the field of mobile devices including mobile phones, laptop computers and digital cameras, and electric vehicles including hybrid electric vehicles (HEVs).

Accordingly, according to another embodiment of the present disclosure, there are provided a battery module comprising the lithium secondary battery as a unit cell and a battery pack comprising the same.

The battery module or the battery pack may be used as a power source of at least one medium- and large-scale device of power tools; electric vehicles including electric vehicles (EVs), hybrid electric vehicles, and plug-in hybrid electric vehicles (PHEVs); or energy storage systems.

Hereinafter, the embodiment of the present disclosure will be described in sufficiently detail for those having ordinary skill in the technical field pertaining to the present disclosure to easily practice the present disclosure. However, the present disclosure may be embodied in many different forms and is not limited to the disclosed embodiment.

### Example 1

Polymer A (Solvay, vinylidenefluoride-hexafluoropropylene copolymer, VDF:HFP=3:1(weight ratio), the average particle size: 250 nm, the melting point: 100°C, Mw=1,080,000)] as a first binder polymer and denka carbon black (BET=60 m²/g, DBP=200 ml/100 g) are dispersed in water at a weight ratio of 2:1, and Daicel 2200 as a thickening agent is fed at 1/5 of the weight of the binder polymer to prepare an aqueous slurry comprising 10% solids. Subsequently, the aqueous slurry is coated on two surfaces of a 20 µm thick aluminum foil using a Micro gravure coater and dried at 120°C for 3 min to form an adhesion enhancement layer on the aluminum foil. A positive electrode active material slurry prepared by mixing LiFe(PO₄), polyvinylidenefluoride (Mw=630,000) as a second binder polymer and denka carbon black (BET=60 m²/g, DBP=200 ml/100 g) at 96:2:2 is coated on the adhesion enhancement layer, dried at 140°C for 10 min and pressed to manufacture a positive electrode.

Lithium metal is used for a negative electrode, and the negative electrode and the positive electrode are stacked with a separator (Celgard) interposed between the negative electrode and the positive electrode to manufacture an electrode assembly. The electrode assembly is punched into a coin shape, and an electrolyte solution in which 1M LiPF6 is dissolved in a mixed solvent (PC:EMC:EC=3:4:3) of propylene carbonate (PC), ethylmethyl carbonate (EMC) and ethylene carbonate (EC) is injected to manufacture a test lithium secondary battery.

### Example 2

A lithium secondary battery is manufactured in the same way as example 1 except that changes are made as shown in the following Table 1.

### Example 3

A lithium secondary battery is manufactured in the same way as example 1 except that changes are made as shown in the following Table 1.

### Example 4

A lithium secondary battery is manufactured in the same way as example 1 except that for the first binder polymer, polymer B (Solvay, vinylidenefluoride-hexafluoropropylene copolymer, VDF:HFP=97:3 (weight ratio), average particle size: 250 nm, melting point: 140°C, Mw=800,000)] is used, and changes are made as shown in the following Table 1.

### Example 5

A lithium secondary battery is manufactured in the same way as example 1 except that changes are made as shown in the following Table 1. The weight ratio of polymer A: denka carbon black:Mw-CNT in example 5 is 2:1:0.1.

### Comparative example 1

A lithium secondary battery is manufactured in the same way as example 1 except that changes are made as shown in the following Table 1.

### Comparative example 2

A lithium secondary battery is manufactured in the same way as example 1 except that for the first binder polymer, polymer C (Solvay, polyvinylidenefluoride, average particle size: 250 nm, melting point: 168°C, Mw=600,000)] is used, and changes are made as shown in the following Table 1.

### Comparative example 3

A lithium secondary battery is manufactured in the same way as example 1 except that the adhesion enhancement layer is formed as below.

Polymer D (Solvay, polyvinylidenefluoride, melting point: 168°C, Mw=630,000] as the first binder polymer and denka carbon black (product name: Li-250) are added at a weight ratio of 2:1 to prepare a 10% organic slurry polymer in which the denka carbon black is dispersed and the polymer D is dissolved in NMP. Subsequently, the organic slurry is coated on two surfaces of a 20 µm thick aluminum foil and dried at 120°C for 3 min to form an adhesion enhancement layer on the aluminum foil.

### Comparative example 4

A lithium secondary battery is manufactured in the same way as comparative example 3 except that polymer E (Solvay, polyvinylidenefluoride, melting point: 170°C, Mw=1,000,000) as the first binder polymer and denka carbon black (BET=60 m²/g, DBP=200 ml/100 g) are added at a weight ratio of 2:1 to prepare a 10% organic slurry in which the denka carbon black is dispersed and the polymer E is dissolve din NMP.

### Example 6

Polymer A (Solvay, vinylidenefluoride-hexafluoropropylene copolymer, VDF:HFP=3:1 (weight ratio), average particle size: 250 nm, melting point: 100°C, Mw=1,080,000)] as a first binder polymer and denka carbon black (product name: Li-250) having the average particle size of 37 nm as a first conductive material are dispersed in water at a weight ratio of 2:1, Daicel 2200 as a thickening agent is fed at 1/5 of the weight of the binder polymer to prepare an aqueous slurry comprising 10% solids. Subsequently, the aqueous slurry is coated on two surfaces of a 20 µm thick aluminum foil using a Micro gravure coater and dried at 120°C for 3 min to form an adhesion enhancement layer on the aluminum foil. A positive electrode active material slurry prepared by mixing LiFe(PO₄), polyvinylidenefluoride (Mw=630,000) as the second binder polymer and denka carbon black (product name: Li-250) as the second conductive material at 96:2:2 is coated on the adhesion enhancement layer, dried at 140°C for 10 minutes and pressed to manufacture a positive electrode.

Lithium metal is used for a negative electrode, and the negative electrode and the positive electrode are stacked with a separator (Celgard) interposed between the negative electrode and the positive electrode to manufacture an electrode assembly. The electrode assembly is punched into a coin shape, and an electrolyte solution in which 1M LiPF₆ is dissolved in a mixed solvent (PC:EMC:EC=3:4:3) of propylene carbonate (PC), ethylmethyl carbonate (EMC) and ethylene carbonate (EC) is injected to manufacture a test lithium secondary battery.

### Example 7

A lithium secondary battery is manufactured in the same way as example 6 except that denka carbon black (product name: Li-435) having the average particle size of 23 nm is used for the first conductive material, and the ratio of the polymer A and the conductive material is changed to 1:1.

### Example 8

A lithium secondary battery is manufactured in the same way as example 6 except that changes are made as shown in the following Table 2.

### Example 9

A lithium secondary battery is manufactured in the same way as example 6 except that polymer B (Solvay, vinylidenefluoride-hexafluoropropylene copolymer, VDF:HFP=97:3 (weight ratio), average particle size: 250 nm, melting point: 140°C, Mw=800,000)] is used for the first binder polymer and changes are made as shown in the following Table 2.

### Example 10

A lithium secondary battery is manufactured in the same way as example 6 except that LiNi_{0.50}Co_{0.20}Mn_{0.30}O₂ is used instead LiFe(PO₄), polyvinylidenefluoride (Mw=630,000) is used for the second binder polymer, Super-P is used for the second conductive material and their weight ratio is 97.5:1.5:1.

### Comparative examples 5 and 6

A lithium secondary battery is manufactured in the same way as example 6 except that changes are made as shown in the following Table 2.

### Comparative example 7

A lithium secondary battery is manufactured in the same way as Comparative example 5 except that LiNi_{0.50}Co_{0.20}Mn_{0.30}O₂ is used instead of LiFe(PO₄), polyvinylidenefluoride (Mw=630,000) is used for the second binder polymer, Super-P is used for the second conductive material and their weight ratio is 97.5:1.5:1.

### Comparative example 8

A lithium secondary battery is manufactured in the same way as example 6 except that the adhesion enhancement layer is formed as below.

Polymer C (Solvay, polyvinylidenefluoride, melting point: 168°C, Mw=880,000] as a first binder polymer and denka carbon black (product name: Li-250) are added at a weight ratio of 2:1 to prepare an 10% organic slurry in which the denka carbon black is dispersed and the polymer C is dissolved in NMP. Subsequently, the organic slurry is coated on two surfaces of a 20 µm thick aluminum foil and dried at 120°C for 3 min to form an adhesion enhancement layer on the aluminum foil.

### <Melting point measurement of binder polymer>

The melting point of the binder polymer is measured using differential scanning calorimetry (DSC).

5 to 10 mg of specimen is fed using TA DSC2500, and thermal scanning is performed with the increasing temperature at the heating rate of 10°C/min from 50 to 250°C under a nitrogen atmosphere, the decreasing temperature at the cooling rate of 10°C/min, and the increasing temperature at the heating rate of 10°C/min from 50 to 250°C.

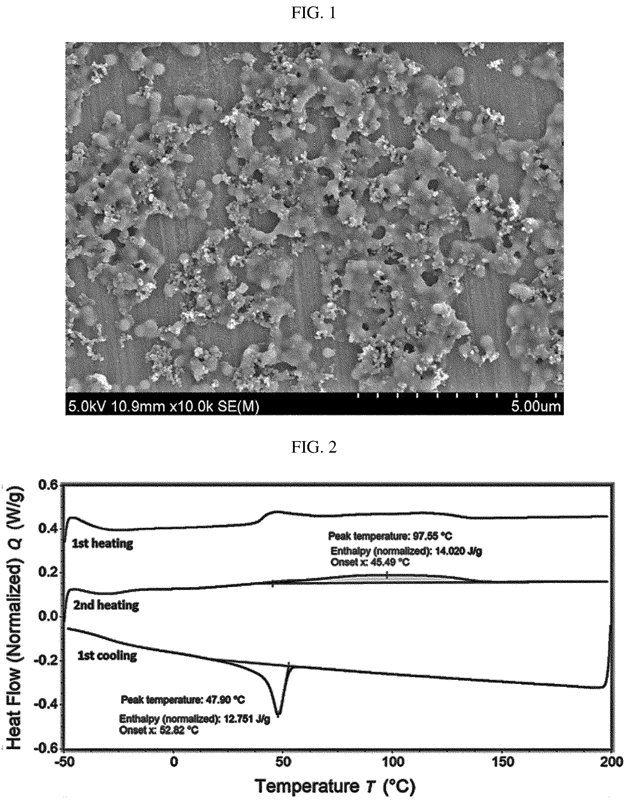

FIG. 2 is a DSC chart of polymer A of example 1. Referring to FIG. 2, a melting point may be obtained by endothermic peaks during 2^{nd} heating, and the melting point is found to be the temperature at the peak apex.

### <Weight average molecular weight measurement of polymer>

0.04 g of polymer is taken and dissolved in 10 g of tetrahydrofuran to prepare a sample specimen, and a reference specimen (polystyrene) and the sample specimen are filtered through a filter having the pore size of 0.45 µm, and injected into a GPC injector. The number average molecular weight, the weight average molecular weight and the polydispersity of the acrylic polymer are measured by comparing the elution time of the sample specimen with the calibration curve of the reference specimen. The measurements are made at the flow rate of 1.00 mL/min and the column temperature of 35.0°C using GPC (Infinity II 1260, Agilient).

### <Average particle size measurement of polymer particles>

The polymer particles are scanned by SEM and the average particle size is measured by averaging the lengths of long axes.

### <Average particle size measurement of conductive material>

The average particle size D50 of the conductive material is measured using laser diffraction. The conductive material is dispersed in a dispersion medium and the average particle size D50 at 50% of the particle size distribution is calculated using a laser diffraction particle size measurement equipment (Microtac MT 3000).

### <Adhesion strength evaluation>

The positive electrodes manufactured according to example and comparative example are punched into a size of 2cm (width) x 10cm (length) or more using a punching machine. Glass is used for a base plate (2.5cm (width) X 7.5cm (length) X 1T (thickness)), a double-sided tape is attached to the glass, and the punched electrode is attached in parallel. The electrode attached to the tape is 6 cm, and the adhesion strength of the electrode is measured while maintaining 90° with the base plate using a texture analyzer (LLOYD).

### <WET adhesion strength evaluation>

The WET adhesion strength evaluation is performed by storing the electrode coated foil through a vacuum drying oven at 130°C for 24 hr to remove moisture, receiving the electrode in an aluminum pouch together with the electrolyte solution, sealing up the aluminum pouch, storing in the 70°C oven for 2 weeks and measuring the adhesion strength. In this instance, to remove the remaining electrolyte solution, the electrode is washed using a DMC washing solution and completely dried, and measurements are made. As the adhesion enhancement layer is less resistant to dissolution than before the evaluation of the resistance to the electrolyte solution, the adhesion strength of the adhesion enhancement layer to the electrolyte solution is lower when applied to lithium secondary batteries.

### <Interfacial resistance evaluation>

The positive electrodes manufactured according to example and comparative example are punched into a size of 5 cm (horizontal) X 5 cm (vertical) using a punching machine. Each of the thickness of the punched electrode, the thickness of the aluminum foil and the specific resistance value (2.82E-06) of the current collector is input using Mp tester (HIOKI), and the punched electrode is placed below a tip at which a probe is embedded and measured by lowering the bar.

**[Table 1]**

| | | Example 1 | Exam ple 2 | Exam ple 3 | Exam ple 4 | Exam ple 5 | Com parati ve exam ple 1 | Com parati ve exam ple 2 | Com parati ve exam ple 3 | Com parati ve exam ple 4 |
|---|---|---|---|---|---|---|---|---|---|---|
| Adh esio n enha nce ment layer | First binder | Poly mer A | Poly mer A | Poly mer A | Poly mer B | Poly mer A | Poly mer A | Poly mer C | Poly mer D | Poly mer E |
| | First binder : Conductive material (weight ratio) | 2:1 | 2:1 | 5:1 | 2:1 | 2:1:0. 1(M w-CNT) | 10:0 | 2:1 | 2:1 | 2:1 |
| | Thickness (nm, one side/contact type) | 200 | 500 | 100 | 200 | 200 | 200 | 200 | 200 | 300 |
| | Drying temperature (°C) | 120 | 120 | 120 | 150 | 120 | 120 | 170 | 120 | 120 |
| | Coating phase of binder | Islan d | Islan d | Islan d | Islan d | Islan d | Islan d | Islan d | Over all distri butio n | Over all distri butio n |
| Posit ive elect rode activ e mate rial layer | Thickness (um, before pressing, one side) | 106 | 100 | 103 | 108 | 106 | 106 | 100 | 106 | 110 |
| | Thickness (um, after pressing, one side) | 90 | 90 | 90 | 91 | 90 | 90 | 89 | 92 | 88 |
| Resu lts | Adhesion (gf/2cm) | 62 | 81.5 | 102 | 52 | 62 | 112 | 27 | 12 | 50 |
| | Interfacial resistance (Ωcm²) | 0.25 | 0.1 | 0.98 | 0.28 | 0.2 | 8 | 0.8 | 2.5 | 3.1 |
| Dura bilit y eval uatio n (Res istan ce to elect rolyt e solut ion) | WET adhesion strength | 81 | 94 | 110 | 63 | 78 | 120 | 26 | 5 (deta ched) | 29 |

**[ Table 2]**

| | | Exam ple 6 | Exam ple 7 | Exam ple 8 | Exam ple 9 | Exam ple 10 | Com parati ve exam ple 5 | Com parati ve exam ple 6 | Com parati ve exam ple 7 | Com parati ve exam ple 8 |
|---|---|---|---|---|---|---|---|---|---|---|
| Adh esio n enha nce ment layer | First binder | Poly mer A | Poly mer A | Poly mer A | Poly mer B | Poly mer A | Poly mer A | Poly mer A | Poly mer A | Poly mer C |
| | First conductive material | Li-250 (aver age partic le size: 37 nm) | Li-435 (aver age partic le size: 23 nm) | Li-250 (aver age partic le size: 37 nm) | Li-250 (aver age partic le size: 37 nm) | Li-250 (aver age partic le size: 37 nm) | Li-250 (aver age partic le size: 37 nm) | Li-250 (aver age partic le size: 37 nm) | Li-250 (aver age partic le size: 37 nm) | Li-250 (aver age partic le size: 37 nm) |
| | First binder : Conductive material (weight ratio) | 2:1 | 1:1 | 5:1 | 2:1 | 2:1 | 10:1 | 0.3:1 | 10:1 | 2:1 |
| | Thickness (nm, one side/contact type) | 300 | 300 | 200 | 200 | 200 | 200 | 400 | 200 | 300 |
| | Drying temperature (°C) | 120 | 120 | 120 | 150 | 120 | 120 | 120 | 120 | 120 |
| | Coating phase of binder | Islan d | Islan d | Islan d | Islan d | Islan d | Islan d | Islan d | Islan d | Over all distri butio n |
| Posit ive elect rode activ e mate rial layer | Type of active material | LFP | LFP | LFP | LFP | NCM | LFP | LFP | NCM | LFP |
| | Thickness (um, before pressing, one side) | 110 | 112 | 115 | 117 | 117 | 111 | 115 | 112 | 110 |
| | Thickness (um, after pressing, one side) | 92 | 90 | 90 | 92 | 81 | 89 | 92 | 78 | 95 |
| Resu lts | Adhesion (gf/2cm) | 58 | 52 | 72 | 47 | 71 | 92 | 12 (deta ched) | 117 | 62 |
| | interfacial resistance (Ωcm²) | 0.4 | 0.1 | 1.1 | 0.5 | 0.1 | 4.2 | 0.05 | 3.2 | 3.6 |
| Dura bilit y eval uatio n (Res istance to elect rolyt e solut ion) | WET Adhesion (gf/2cm) | 72 | 66 | 98 | 62 | 99 | 111 | 10 | 120 | 88 |

Referring to the results of Tables 1 and 2, it can be seen that the positive electrodes of examples 1 to 10 having the adhesion enhancement layer containing the binder polymer and the conductive material according to the present disclosure have the improved adhesion strength and low interfacial resistance when using the specific binder component.

In contrast, it can be seen that comparative example 1 containing no conductive material has high interfacial resistance, and comparative example 2 containing no binder polymer having the specific melting point of the present disclosure has lower adhesion strength than the positive electrodes of examples. Additionally, it can be seen that comparative examples 3, 4 and 8 using the organic slurry in which the binder polymer is dissolved in the solvent have high interfacial resistance.

Additionally, it can be seen that comparative examples 5 and 7 having very low weight ratio of the first conductive material to the first binder polymer have very high interfacial resistance, and comparative example 6 having very high weight ratio of the first conductive material to the first binder polymer has very low adhesion strength.

## Claims

1. A method for manufacturing a positive electrode current collector coated with an adhesion enhancement layer, comprising the steps of:
preparing an aqueous slurry comprising a first binder polymer comprising polyvinylidenefluoride-based polymer particles having a melting point of 50 to 150°C and a first conductive material at a weight ratio of 0.5: 1 to 8:1; and
coating the aqueous slurry on at least one surface of a metal current collector and drying by thermal treatment at higher temperature than the melting point of the polyvinylidenefluoride-based polymer particles to form the adhesion enhancement layer;
wherein the first binder polymer is distributed in an island array over the surface of the metal current collector and the island arrays does not cover the entire surface of the current collector;
wherein the melting point is measured using differential scanning calorimetry.

2. The method for manufacturing a positive electrode current collector coated with an adhesion enhancement layer according to claim 1, wherein the melting point of the polyvinylidenefluoride-based polymer is 70 to 150°C
wherein the melting point is measured using differential scanning calorimetry.

3. The method for manufacturing a positive electrode current collector coated with an adhesion enhancement layer according to claim 1, wherein the polyvinylidenefluoride-based polymer is a vinylidenefluoride-hexafluoropropylene copolymer.

4. The method for manufacturing a positive electrode current collector coated with an adhesion enhancement layer according to claim 1, wherein a weight average molecular weight of the polyvinylidenefluoride-based polymer is 700,000 to 1,300,000
wherein the molecular weight is measured according to the method of the description.

5. The method for manufacturing a positive electrode current collector coated with an adhesion enhancement layer according to claim 1, wherein an average particle size of the polyvinylidenefluoride-based polymer particles is 10 nm to 3 µm;
wherein the average particle size of the polymer particles is measured according to the method of the description.

6. The method for manufacturing a positive electrode current collector coated with an adhesion enhancement layer according to claim 1, wherein an average particle size of the polyvinylidenefluoride-based polymer particles is 100 nm to 1,000 nm, and an average particle size of the first conductive material is 10 nm to 1,000 nm;
wherein the average particle size of the polymer particles is measured according to the method of the description
wherein the average particle size of the conductive material is measured according to the method of the description.

7. The method for manufacturing a positive electrode current collector coated with an adhesion enhancement layer according to claim 6, wherein the average particle size of the polyvinylidenefluoride-based polymer particles is 3 to 20 times larger than the average particle size of the first conductive material;
wherein the average particle size of the polymer particles is measured according to the method of the description
wherein the average particle size of the conductive material is measured according to the method of the description.

8. The method for manufacturing a positive electrode current collector coated with an adhesion enhancement layer according to claim 1, wherein the drying is performed at the higher temperature than the melting point of the polyvinylidenefluoride-based polymer particles by 10 to 80°C;
wherein the melting point is measured using differential scanning calorimetry.

9. A positive electrode current collector coated with an adhesion enhancement layer, comprising:
a metal current collector; and
an adhesion enhancement layer on at least one surface of the metal current collector, the adhesion enhancement layer comprising a first binder polymer and a first conductive material at a weight ratio of 0.5:1 to 8:1,
wherein the first binder polymer comprises a polyvinylidenefluoride-based polymer,
wherein the first binder polymer is distributed in an island array over the surface of the metal current collector, and
wherein a melting point of the polyvinylidenefluoride-based polymer is 50 to 150°C;
wherein the first binder polymer is distributed in an island array over the surface of the metal current collector and the island arrays does not cover the entire surface of the current collector;
wherein the melting point is measured using differential scanning calorimetry.

10. The positive electrode current collector coated with an adhesion enhancement layer according to claim 9, wherein the melting point of the polyvinylidenefluoride-based polymer is 70 to 150°C;
wherein the melting point is measured using differential scanning calorimetry.

11. The positive electrode current collector coated with an adhesion enhancement layer according to claim 9, wherein the polyvinylidenefluoride-based polymer is a vinylidenefluoride-hexafluoropropylene copolymer.

12. The positive electrode current collector coated with an adhesion enhancement layer according to claim 9, wherein a weight average molecular weight of the polyvinylidenefluoride-based polymer is 700,000 to 1,3000,000 wherein the molecular weight is measured according to the method of the description.

13. A method for manufacturing a positive electrode for a lithium secondary battery, comprising the steps of:
manufacturing the positive electrode current collector coated with an adhesion enhancement layer according to any one of claims 1 to 8; and
stacking a positive electrode active material layer comprising a positive electrode active material, a second conductive material and a second binder polymer on the adhesion enhancement layer and attaching to the adhesion enhancement layer.

14. A positive electrode for a lithium secondary battery, comprising:
the positive electrode current collector coated with an adhesion enhancement layer according to any one of claims 9 to 12; and
a positive electrode active material layer attached onto the adhesion enhancement layer, and comprising a positive electrode active material, a second conductive material and a second binder polymer.

15. A lithium secondary battery comprising the positive electrode according to claim 14.

## Patentansprüche

1. Verfahren zur Herstellung eines mit einer Haftverbesserungsschicht beschichteten Stromsammelers für eine positive Elektrode, umfassend die Schritte des:
Bereitstellens einer wässrigen Aufschlämmung, welche ein erstes Bindungspolymer, welches Polyvinylidenfluorid-basierte Polymerpartikel mit einem Schmelzpunkt von 50 bis 150 °C umfasst, und ein erstes leitfähiges Material in einem Gewichtsverhältnis von 0,5:1 bis 8:1 umfasst, und
Aufbringens der wässrigen Aufschlämmung auf wenigstens eine Oberfläche eines metallischen Stromsammelers und Trocknens durch Wärmebehandlung bei einer höheren Temperatur als der Schmelzpunkt der Polyvinylidenfluorid-basierten Polymerpartikel, um die Haftverbesserungsschicht zu bilden;
wobei das erste Bindungspolymer in einer Inselanordnung über der Oberfläche des metallischen Stromsammelers verteilt ist und die Inselanordnung nicht die gesamte Oberfläche des Stromsammelers bedeckt;
wobei der Schmelzpunkt mittels Differential-Scanning-Kalorimetrie gemessen wird.

2. Verfahren zur Herstellung eines mit einer Haftverbesserungsschicht beschichteten Stromsammelers für eine positive Elektrode nach Anspruch 1, wobei der Schmelzpunkt des Polyvinylidenfluorid-basierten Polymers 70 bis 150 °C beträgt;
wobei der Schmelzpunkt mittels Differential-Scanning-Kalorimetrie gemessen wird.

3. Verfahren zur Herstellung eines mit einer Haftverbesserungsschicht beschichteten Stromsammelers für eine positive Elektrode nach Anspruch 1, wobei das Polyvinylidenfluorid-basierte Polymer ein Vinylidenfluorid-Hexafluorpropylen-Copolymer ist.

4. Verfahren zur Herstellung eines mit einer Haftverbesserungsschicht beschichteten Stromsammelers für eine positive Elektrode nach Anspruch 1, wobei ein gewichtsmittleres Molekulargewicht des Polyvinylidenfluorid-basierten Polymers 700.000 bis 1.300.000 beträgt, wobei das Molekulargewicht gemäß dem Verfahren der Beschreibung gemessen wird.

5. Verfahren zur Herstellung eines mit einer Haftverbesserungsschicht beschichteten Stromsammelers für eine positive Elektrode nach Anspruch 1, wobei eine mittlere Teilchengröße der Polyvinylidenfluorid-basierten Polymerpartikel 10 nm bis 3 µm beträgt; wobei die mittlere Teilchengröße der Polymerpartikel gemäß dem Verfahren der Beschreibung gemessen wird.

6. Verfahren zur Herstellung eines mit einer Haftverbesserungsschicht beschichteten Stromsammelers für eine positive Elektrode nach Anspruch 1, wobei eine mittlere Teilchengröße der Polyvinylidenfluorid-basierten Polymerpartikel 100 nm bis 1.000 nm beträgt und wobei eine mittlere Teilchengröße des ersten leitfähigen Materials 10 nm bis 1.000 nm beträgt; wobei die mittlere Teilchengröße der Polymerpartikel gemäß dem Verfahren der Beschreibung gemessen wird, wobei die mittlere Teilchengröße des leitfähigen Materials gemäß dem Verfahren der Beschreibung gemessen wird.

7. Verfahren zur Herstellung eines mit einer Haftverbesserungsschicht beschichteten Stromsammelers für eine positive Elektrode nach Anspruch 6, wobei die mittlere Teilchengröße der Polyvinylidenfluorid-basierten Polymerpartikel 3- bis 20-mal größer ist als die mittlere Teilchengröße des ersten leitfähigen Materials;
wobei die mittlere Teilchengröße der Polymerpartikel gemäß dem Verfahren der Beschreibung gemessen wird,
wobei die mittlere Teilchengröße des leitfähigen Materials gemäß dem Verfahren der Beschreibung gemessen wird.

8. Verfahren zur Herstellung eines mit einer Haftverbesserungsschicht beschichteten Stromsammelers für eine positive Elektrode nach Anspruch 1, wobei das Trocknen bei einer Temperatur durchgeführt wird, welche um 10 bis 80 °C höher ist als der Schmelzpunkt der Polyvinylidenfluorid-basierten Polymerpartikel;
wobei der Schmelzpunkt mittels Differential-Scanning-Kalorimetrie gemessen wird.

9. Mit einer Haftverbesserungsschicht beschichteter Stromsammeler für eine positive Elektrode, umfassend:
einen metallischen Stromsammeler; und
eine Haftverbesserungsschicht auf wenigstens einer Oberfläche des metallischen Stromsammelers, wobei die Haftverbesserungsschicht ein erstes Bindungspolymer und ein erstes leitfähiges Material in einem Gewichtsverhältnis von 0,5:1 bis 8:1 umfasst,
wobei das erste Bindungspolymer ein Polyvinylidenfluorid-basiertes Polymer umfasst,
wobei das erste Bindungspolymer in einer Inselanordnung über der Oberfläche des metallischen Stromsammelers verteilt ist, und
wobei ein Schmelzpunkt des Polyvinylidenfluorid-basierten Polymers 50 bis 150 °C beträgt;
wobei das erste Bindungspolymer in einer Inselanordnung über der Oberfläche des metallischen Stromsammelers verteilt ist und die Inselanordnung nicht die gesamte Oberfläche des Stromsammelers bedeckt;
wobei der Schmelzpunkt mittels Differential-Scanning-Kalorimetrie gemessen wird.

10. Mit einer Haftverbesserungsschicht beschichteter Stromsammeler für eine positive Elektrode nach Anspruch 9, wobei der Schmelzpunkt des Polyvinylidenfluorid-basierten Polymers 70 bis 150 °C beträgt;
wobei der Schmelzpunkt mittels Differential-Scanning-Kalorimetrie gemessen wird.

11. Mit einer Haftverbesserungsschicht beschichteter Stromsammeler für eine positive Elektrode nach Anspruch 9, wobei das Polyvinylidenfluorid-basierte Polymer ein Vinylidenfluorid-Hexafluorpropylen-Copolymer ist.

12. Mit einer Haftverbesserungsschicht beschichteter Stromsammeler für eine positive Elektrode nach Anspruch 9, wobei ein gewichtsmittleres Molekulargewicht des Polyvinylidenfluorid-basierten Polymers 700.000 bis 1.300.000 beträgt, wobei das Molekulargewicht gemäß dem Verfahren der Beschreibung gemessen wird.

13. Verfahren zur Herstellung einer positiven Elektrode für eine Lithium-Sekundärbatterie, umfassend die Schritte des:
Herstellens des mit einer Haftverbesserungsschicht beschichteten Stromsammelers für eine positive Elektrode nach einem der Ansprüche 1 bis 8; und
Aufbringen einer aktiven Materialschicht der positiven Elektrode, welche ein aktives Material der positiven Elektrode, ein zweites leitfähiges Material und ein zweites Bindungspolymer umfasst, auf der Haftverbesserungsschicht und Befestigens an der Haftverbesserungsschicht.

14. Positive Elektrode für eine Lithium-Sekundärbatterie, umfassend:
den mit einer Haftverbesserungsschicht beschichteten Stromsammeler für eine positive Elektrode nach einem der Ansprüche 9 bis 12; und
eine aktive Materialschicht der positiven Elektrode, welche an der Haftverbesserungsschicht befestigt ist und ein aktives Material der positiven Elektrode, ein zweites leitfähiges Material und ein zweites Bindungspolymer umfasst.

15. Lithium-Sekundärbatterie, welche die positive Elektrode nach Anspruch 14 umfasst.

## Revendications

1. Procédé de fabrication d'un collecteur de courant d'électrode positive revêtu d'une couche d'amélioration de l'adhérence, comprenant les étapes de :
préparation d'une boue aqueuse comprenant un premier polymère liant comprenant des particules de polymère à base de polyfluorure de vinylidène présentant un point de fusion de 50 à 150 °C et un premier matériau conducteur selon un rapport pondéral de 0,5:1 à 8:1 ; et
revêtement de la boue aqueuse sur au moins une surface d'un collecteur de courant métallique et séchage par traitement thermique à une température supérieure au point de fusion des particules de polymère à base de polyfluorure de vinylidène pour former la couche d'amélioration de l'adhérence ;
dans lequel le premier polymère liant est réparti en un réseau d'îlots sur la surface du collecteur de courant métallique et les réseaux d'îlots ne couvrent pas la totalité de la surface du collecteur de courant ;
dans lequel le point de fusion est mesuré à l'aide d'une calorimétrie différentielle à balayage.

2. Procédé de fabrication d'un collecteur de courant d'électrode positive revêtu d'une couche d'amélioration de l'adhérence selon la revendication 1, dans lequel le point de fusion du polymère à base de polyfluorure de vinylidène est de 70 à 150 °C
dans lequel le point de fusion est mesuré à l'aide d'une calorimétrie différentielle à balayage.

3. Procédé de fabrication d'un collecteur de courant d'électrode positive revêtu d'une couche d'amélioration de l'adhérence selon la revendication 1, dans lequel le polymère à base de polyfluorure de vinylidène est un copolymère de fluorure de vinylidène-hexafluoropropylène.

4. Procédé de fabrication d'un collecteur de courant d'électrode positive revêtu d'une couche d'amélioration de l'adhérence selon la revendication 1, dans lequel un poids moléculaire moyen en poids du polymère à base de polyfluorure de vinylidène est de 700 000 à 1 300 000
dans lequel le poids moléculaire est mesuré selon le procédé de la description.

5. Procédé de fabrication d'un collecteur de courant d'électrode positive revêtu d'une couche d'amélioration de l'adhérence selon la revendication 1, dans lequel une taille moyenne des particules du polymère à base de polyfluorure de vinylidène est de 10 nm à 3 µm ;
dans lequel la taille moyenne des particules du polymère est mesurée selon le procédé de la description.

6. Procédé de fabrication d'un collecteur de courant d'électrode positive revêtu d'une couche d'amélioration de l'adhérence selon la revendication 1, dans lequel une taille moyenne des particules du polymère à base de polyfluorure de vinylidène est de 100 nm à 1 000 nm, et une taille moyenne des particules du premier matériau conducteur est de 10 nm à 1 000 nm ;
dans lequel la taille moyenne des particules du polymère est mesurée selon le procédé de la description ;
dans lequel la taille moyenne des particules du matériau conducteur est mesurée selon le procédé de la description.

7. Procédé de fabrication d'un collecteur de courant d'électrode positive revêtu d'une couche d'amélioration de l'adhérence selon la revendication 6, dans lequel la taille moyenne des particules du polymère à base de polyfluorure de vinylidène est de 3 à 20 fois supérieure à la taille moyenne des particules du premier matériau conducteur ;
dans lequel la taille moyenne des particules du polymère est mesurée selon le procédé de la description ;
dans lequel la taille moyenne des particules du matériau conducteur est mesurée selon le procédé de la description.

8. Procédé de fabrication d'un collecteur de courant d'électrode positive revêtu d'une couche d'amélioration de l'adhérence selon la revendication 1, dans lequel le séchage est réalisé à une température supérieure de 10 à 80 °C au point de fusion des particules de polymère à base de polyfluorure de vinylidène ;
dans lequel le point de fusion est mesuré à l'aide d'une calorimétrie différentielle à balayage.

9. Collecteur de courant d'électrode positive revêtu d'une couche d'amélioration de l'adhérence, comprenant :
un collecteur de courant métallique ; et
une couche d'amélioration de l'adhérence sur au moins une surface du collecteur de courant métallique, la couche d'amélioration de l'adhérence comprenant un premier polymère liant et un premier matériau conducteur selon un rapport pondéral de 0,5:1 à 8:1,
dans lequel le premier polymère liant comprend un polymère à base de polyfluorure de vinylidène,
dans lequel le premier polymère liant est réparti en un réseau d'îlots sur la surface du collecteur de courant métallique, et
dans lequel un point de fusion du polymère à base de polyfluorure de vinylidène est de 50 à 150 °C ;
dans lequel le premier polymère liant est réparti en un réseau d'îlots sur la surface du collecteur de courant métallique et les réseaux d'îlots ne couvrent pas la totalité de la surface du collecteur de courant ;
dans lequel le point de fusion est mesuré à l'aide d'une calorimétrie différentielle à balayage.

10. Collecteur de courant d'électrode positive revêtu d'une couche d'amélioration de l'adhérence selon la revendication 9, dans lequel le point de fusion du polymère à base de polyfluorure de vinylidène est de 70 à 150 °C ;
dans lequel le point de fusion est mesuré à l'aide d'une calorimétrie différentielle à balayage.

11. Collecteur de courant d'électrode positive revêtu d'une couche d'amélioration de l'adhérence selon la revendication 9, dans lequel le polymère à base de polyfluorure de vinylidène est un copolymère de fluorure de vinylidène-hexafluoropropylène.

12. Collecteur de courant d'électrode positive revêtu d'une couche d'amélioration de l'adhérence selon la revendication 9, dans lequel un poids moléculaire moyen pondéré du polymère à base de polyfluorure de vinylidène est de 700 000 à 1 300 000, dans lequel le poids moléculaire est mesuré selon le procédé de la description.

13. Procédé de fabrication d'une électrode positive pour une batterie secondaire au lithium, comprenant les étapes de :
fabrication du collecteur de courant d'électrode positive revêtu d'une couche d'amélioration de l'adhérence selon l'une quelconque des revendications 1 à 8 ; et
superposition d'une couche de matériau actif d'électrode positive comprenant un matériau actif d'électrode positive, un second matériau conducteur et un second polymère liant sur la couche d'amélioration de l'adhérence et la fixation à la couche d'amélioration de l'adhérence.

14. Électrode positive pour une batterie secondaire au lithium, comprenant :
le collecteur de courant d'électrode positive revêtu d'une couche d'amélioration de l'adhérence selon l'une quelconque des revendications 9 à 12 ; et
une couche de matériau actif d'électrode positive fixée sur la couche d'amélioration de l'adhérence, et comprenant un matériau actif d'électrode positive, un second matériau conducteur et un second polymère liant.

15. Batterie secondaire au lithium comprenant l'électrode positive selon la revendication 14.
